# EUROPÄISCHE PATENTSCHRIFT

(11) **EP 1 348 519 B1**
(45) Veröffentlichungstag und Bekanntmachung des Hinweises auf die Patenterteilung: **07.06.2006**
(21) Anmeldenummer: 03405178.9
(22) Anmeldetag: 14.03.2003
(51) Int. Cl.: B24D 3/06, B23B 51/04, B28D 1/04, B23D 61/18

(54) **Abbauwerkzeug zum abrasiven Abbauen von Feststoffen**
Tool for abrasively cutting solid material
Outil pour abraser des matériaux solides

(30) Priorität: 27.03.2002 US 108830
(43) Veröffentlichungstag der Anmeldung: 01.10.2003
(73) Patentinhaber: HILTI Aktiengesellschaft, 9494 Schaan (LI); 3-One-2 LLC, Voorhees, NJ 08043 (US)
(72) Erfinder: Devrim, Akyüz, 8887 Mels (CH); Tamer, El-Raghy, Voorhees, NJ 08043 (US)
(74) Vertreter: Wildi, Roland

(56) Entgegenhaltungen:
- WO-A-97/27965
- DE-A- 2 850 015
- DE-A- 3 224 141
- DE-U- 8 331 514
- US-A- 4 930 487
- US-A- 5 330 701
- US-A- 5 882 561

## Beschreibung

Die Erfindung betrifft ein Abbauwerkzeug zum Abbauen von Feststoffen mit wenigstens einem Abrasivkörper, der zumindest teilweise in einem Trägermaterial eingebettet ist.

Abbauwerkzeuge der oben genannten Art finden beispielsweise zum Abbauen von Feststoffen an Bauelementen Anwendung. Das Abbauwerkzeug weist ein oder mehrere Abrasivkörper auf, die zumindest teilweise in einem Trägermaterial eingebettet sind. Um ein Abbauen von Feststoffen am Bauelement zu bewirken, wird beispielweise ein oder jeder der Abrasivkörper motorisch relativ zum Bauelement in Bewegung versetzt. Treten der oder die Abrasivkörper mit einer Oberfläche des Bauelements in Kontakt, so werden im Kontaktbereich Feststoffe abgebaut.

Aus der DE 2 850 015 A1 ist ein Abbauwerkzeug mit mehreren Abrasivkörpern bekannt, die in einem Trägermaterial eingebettet sind. Das Trägermaterial besteht im wesentlichen aus Wolfram, Wolfram-Kobalt-Legierungen und einem wesentlichen Teil Wolfram-Karbid.

Ferner ist aus der DE 3 224 141 A1 ein Abbauwerkzeug mit einem bolzenförmigen Trägerkörper bekannt. Am arbeitsrichtungsseitigen Ende des Trägerkörpers weist das Abbauwerkzeug, insbesondere Bohrwerkzeug, ein oder mehrere Abrasivkörper aus Hartmetall auf, die in einem Trägermaterial, insbesondere Lot, eingebettet sind.

Aus der US 4,930,487 ist ein scheibenförmiges Abbauwerkzeug mit mehreren Abrasivkörpern die in einem metallischen Trägermaterial eingebettet sind, bekannt. Die Abrasivkörper sind durch Diamantpartikel gebildet und sind über den gesamten äusseren Umfang des Abbauwerkzeuges angeordnet.

Ausserdem ist aus der DE 8 331 514 U1 ein scheibenförmiges Abbauwerkzeug, insbesondere eine Schleifscheibe mit mehreren Abrasivkörpern, insbesondere Diamantplättchen bekannt.

Aus der DE 3 319 167 A1 ist ein Abbauwerkzeug, insbesondere Seilsäge mit einer mit Abrasivkörpern besetzten Trägermaterial bekannt, wobei das Trägermaterial durch ein Metall und die Abrasivkörper durch Diamantsplitter gebildet sind.

Aus der WO 97/27965 A1 ist ein Verfahren zur Herstellung von Keramiken der Formel M₂R₁X₁ bekannt, bei der M ein Übergangsmetall, R ein Element aus der Gruppe Si, AL, Ge, Pb, Sn, Ga, P, S, In, As, Ti und/oder Cd und X ein Element aus der Gruppe B, C und/oder N ist, und bei dem eine pulverförmige Mixtur die M, R und X enthält, vorzugsweise unter einem Druck von 5 bis 200 MPa, einer Temperatur von 1000° bis 1800° C ausgesetzt wird.

Der US 5 882 561 ist ein Verfahren zur Herstellung einer dichten Keramik zu entnehmen, die u. a. auch Ti₃SiC₂ enthalten kann. Das Ti₃SiC₂ wird zusammen mit einem in diesem löslichen Material, wie z. B. TiSi₂, zu einem Presskörper geformt und anschliessend drucktös bis zum Vorliegen einer Schmelze erhitzt, wobei die Temperatur dabei noch unter der Schmelztemperatur von Ti₃SiC₂ liegt.

Nachteilhaft an den bekannten Lösungen ist, dass die bekannten Trägermaterialien nur für einen beschränkten Anwendungsbereich einsetzbar sind. Je nach Härtegrad eines zu bearbeitenden Feststoffes, kann das Trägermaterial zu hart oder zu weich sein, was zu einer unbefriedigenden Abbauleistung der in das Trägermaterial eingebetteten Abrasivkörpern führt. Insbesondere kommt es bei manchen Anwendungen zu hohen Temperaturen beim Bohrvorgang, wodurch das Trägermaterial zu weich wird und damit die Möglichkeit besteht, dass Abrasivkörper während des Abbauvorganges verloren gehen oder in das Trägermaterial hinein gedrückt werden.

Ferner ist an der bekannten Lösung nachteilig, dass bei der Anwendung eines metallischen Trägermaterials, insbesondere eines eisen- oder kupferhaltigen Trägermaterials, eine äusserst hohe Reibung zwischen dem zu bearbeitenden Feststoff und dem Trägermaterial auftritt. Beispielsweise wenn eine das Feststoff bildende Stoffgruppe ebenfalls metallische Anteile, insbesondere Armierungseisen, aufweist.

Ausserdem ist bei den bekannten Lösungen nachteilig, dass die Bindung des oder der Abrasivkörper mit dem Trägermaterial in einigen Fällen ungenügend ist, und damit eine ungenügende Abbauleistung des Abbauwerkzeuges einhergeht.

Der vorliegenden Erfindung liegt die Aufgabe zugrunde, ein wirtschaftlich herstellbares Abbauwerkzeug mit einer hohen Abbauleistung zu schaffen, das im wesentlichen unabhängig von den äusseren Rahmenbedingungen, insbesondere Temperatur ist und eine hohe Bindung des oder der Abrasivkörper im Trägermaterial sicherstellt.

Erfindungsgemäss wird die Aufgabe dadurch gelöst, dass das Trägermaterial eine Stoffverbindung aus Ti₃SiC₂ enthält.

Dadurch, dass die Gruppe eine keramische Stoffverbindung aus Ti₃SiC₂ aufweist, eignet sich die Gruppe vor allem durch ihre weitgehende Temperaturunabhängigkeit zur Verwendung als Trägermaterial für ein oder mehrere Abrasivkörper. Ferner weist die Gruppe der Stoffverbindungen eine geringe Reibung mit metallischen Feststoffen auf. Dadurch ist beispielsweise auch eine Bearbeitung eines harten, mit einem metallischen Stoff, insbesondere Beton mit Armierungseisen versehenen, Feststoffes problemlos und ohne ein Verklemmen möglich und eine optimale Abbauleistung sicher gestellt. Das Trägermaterial kann beispielsweise ganz oder auch nur teilweise aus der Gruppe der Stoffverbindungen gebildet sein. Falls nur ein Teil des Trägermaterials durch die Gruppe der Verbindungen gebildet ist, kann der übrige Anteil beispielsweise durch ein Metall oder eine Metall-Legierung gebildet sein, insbesondere Kobalt, Bronze oder Eisen. Das Trägermaterial und ein oder mehrere Abrasiv-Körper können beispielsweise auch einen Meta-Abrasivkörper bilden. Dieser oder diese Meta-Abrasivkörper sind dann beispielweise auf einem Trägerkörper angeordnet.

Vorzugsweise ist das Trägermaterial zumindest teilweise auf einem rotationssymmetrischen Trägerkörper angeordnet, um eine unwuchtfreie Drehbewegung des Abbauwerkzeuges zu ermöglichen. Insbesondere bei einer Anwendung des Abbauwerkzeuges zusammen mit beispielweise einer Handwerkzeugmaschine ist ein rotationssymmetrischer Trägerkörper vorteilhaft, um den oder die durch das Trägermaterial am Trägerkörper befestigten Abrasivkörper in zumindest einer Drehbewegung um die Rotationsachse des Trägerkörper zu bewegen. Vorzugsweise verläuft die Rotationsachse parallel zu einer Arbeitsrichtung des Abbauwerkzeuges.

Vorzugsweise ist der Trägerkörper hülsenförmig ausgebildet, um beispielsweise eine Verwendung des Abbauwerkzeuges als Bohrkrone oder dergleichen sicherzustellen.

In einer weiteren Ausführungsform ist der Trägerkörper vorteilhafterweise bolzenförmig ausgebildet, um beispielsweise eine Verwendung als Bohrwerkzeug zu ermöglichen.

Vorzugsweise ist der Trägerkörper scheibenförmig ausgebildet, um eine effiziente Bearbeitung von grossen ebenen Oberflächen eines Feststoffes zu ermöglichen.

Vorteilhafterweise sind der oder jeder Abrasivkörper durch Diamanten gebildet, um eine hohe Härte der Abrasivkörper zu gewährleisten. In einer weiteren vorteilhaften Ausführungsform sind der oder jeder Abrasivkörper durch Hartmetallteile, Bornitrid oder PKD gebildet, um eine wirtschaftliche Herstellung des Abbauwerkzeuges sicherzustellen.

Das Trägermaterial enthält vorzugsweise 50 Volumen-% bis 100 Volumen-% der Stoffverbindung aus Ti₃SiC₂ um eine optimale und temperatur-unabhängige Abbauleistung, insbesondere bei Absenz von Kühlmittel zu gewährleisten.

Vorteilhafterweise enthält das Trägermaterial 5 Volumen-% bis 50 Volumen-% der Stoffverbindung aus Ti₃SiC₂, um eine optimale Abbauleistung bei Verwendung von Kühlmittel sicherzustellen. Insbesondere begünstigt ein derartig bemessener Anteil eine Verschleissbeschleunigung und verhindert dadurch einen Poliereffekt des Abbauwerkzeuges. Beim Poliereffekt überragen die Abrasivkörper das Trägermaterial ungenügend, wodurch die Abbauleistung des Abbauwerkzeuges stark reduziert ist.

Die Erfindung wird nachstehend anhand dreier Ausführungsbeispiele näher erläutert. Es zeigen:
- Fig. 1: Ein erfindungsgemässes Abbauwerkzeug mit einem hülsenförmigen Trägerkörper;
- Fig. 2: ein weiteres Ausführungsbeispiel eines erfindungsgemässen Abbauwerkzeuges mit einem bolzenförmigen Trägerkörper;
- Fig. 3: ein Ausführungsbeispiel eines erfindungsgemässen Abbauwerkzeuges mit einem scheibenförmigen Trägerkörper;
- Fig. 4: einen Schneidkörper nach Figur 3 in Detailansicht.

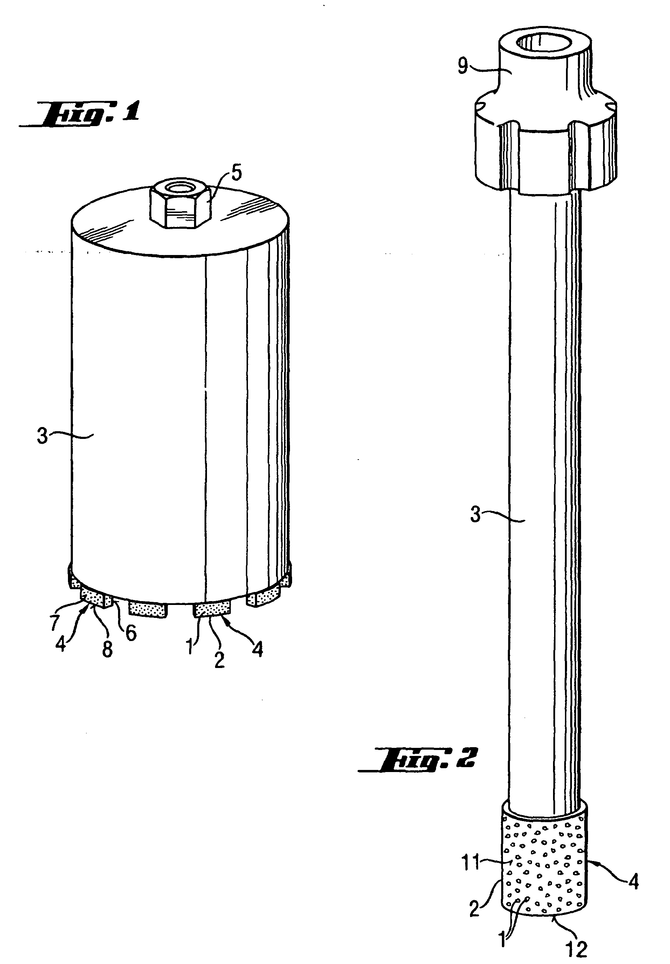

In den Fig. 1 bis 4 ist ein erfindungsgemässes Abbauwerkzeug mit einem oder mehreren Schneidkörpern 4, die durch mehrere Abrasivkörper 1 gebildet werden, welche in einem Trägermaterial 2 eingebettet sind, dargestellt. Die Abrasivkörper 1 weisen beispielsweise Diamantteile auf, die zumindest teilweise im Trägermaterial 2, insbesondere im Ti₃SiC_{2,} eingebettet sind. Der Trägerkörper 3 ist durch das Trägermaterial 2 mit den Abrasivkörpern 1 verbunden.

Die Geometrie der Aussenfläche des Trägerkörpers 3 ist je nach Anwendungsbereich des Abbauwerkzeuges ausgebildet. Um eine Anwendung beispielsweise mit einer Handwerkzeugmaschine zu ermöglichen, ist der Trägerkörper 3 vorzugsweise rotationssymmetrisch ausgebildet.

In der Fig. 1 ist ein Abbauwerkzeug mit einem hülsenförmigen Trägerkörper 3, insbesondere eine Bohrkrone dargestellt. Der Trägerkörper weist an einem Längsende mehrere Schneidkörper 4 auf und am gegenüberliegenden Ende schliesst an den Trägerkörper 3 ein, sich in der Rotationsachse des Trägerkörpers 3 erstreckendes Anschlussteil 5 auf. Durch das Anschlussteil 5 ist es beispielsweise möglich das erfindungsgemässe Abbauwerkzeug in einer Werkzeugaufnahme einer zur Anwendung gelangenden, nicht dargestellten Handwerkzeugmaschine lösbar festzulegen. Die Schneidkörper 4 weisen an der Innenseite 6, der Aussenseite 7 und der Stirnseite 8 im Trägermaterial 2 gelagerte Abrasivkörper 1 auf.

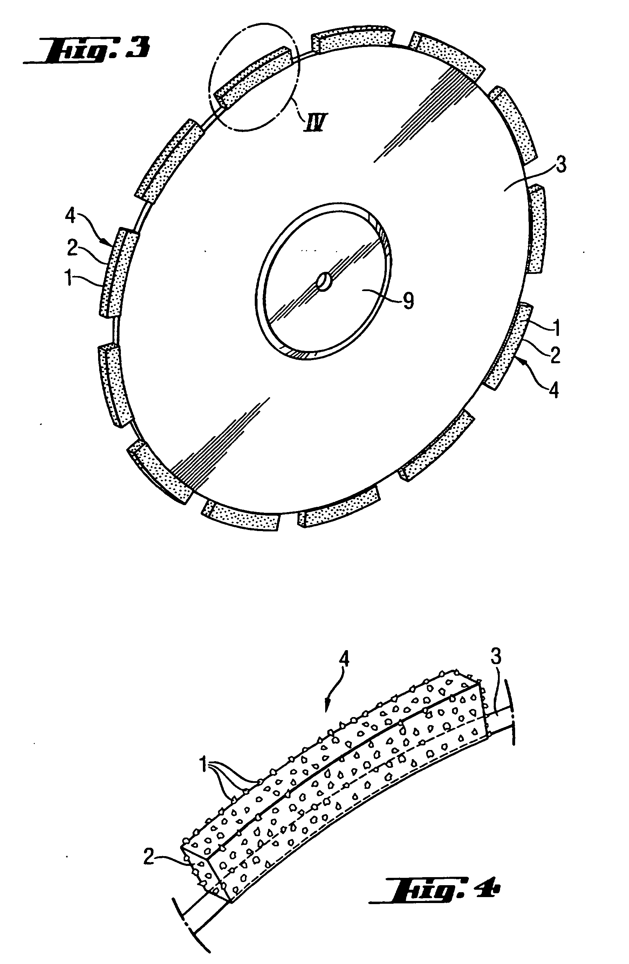

In der Fig. 2 ist ein Abbauwerkzeug mit einem bolzenförmigen Trägerkörper 3, insbesondere ein Bohrer, dargestellt. Der Trägerkörper 3 weist an einem Längsende den Schneidkörper 4 auf und am gegenüberliegenden Ende weist der Trägerkörper 3 einen Anschlussbereich 9 auf. Durch den Anschlussbereich 9 ist es beispielsweise möglich das erfindungsgemässe Abbauwerkzeug in einer Werkzeugaufnahme einer zur Anwendung gelangenden, nicht dargestellten Handwerkzeugmaschine lösbar festzulegen. Der Schneidkörper 4 weist sowohl an der Mantelfläche 11, als auch an der Stirnseite 12 im Trägermaterial 2 gelagerte Abrasivkörper 1 auf.

In der Fig. 3 ist ein Abbauwerkzeug mit einem scheibenförmigen Trägerkörper 3, insbesondere eine Trennscheibe, dargestellt. Der Trägerkörper 3 weist mittig eine Durchgangbohrung zur Bildung eines Anschlussbereiches 9 auf. Die Schneidkörper 4 erstrecken sich vorzugsweise über die Aussenfläche des Trägerkörpers 3.

Die Fig. 4 zeigt eine vergrösserte Detailansicht des in der Fig. 3 dargestellten Schneidkörpers 4.

## Patentansprüche

1. Abbauwerkzeug zum Abbauen von Feststoffen mit wenigstens einem Abrasivkörper (1), der zumindest teilweise in einem Trägermaterial (2) eingebettet ist, **dadurch gekennzeichnet, dass** das Trägermaterial (2) eine Stoffverbindung aus Ti₃SiC₂ enthält.

2. Abbauwerkzeug nach Anspruch 1, **dadurch gekennzeichnet, dass** das Trägermaterial (2) zumindest teilweise auf einem rotationssymmetrischen Trägerkörper (3) angeordnet ist.

3. Abbauwerkzeug nach Anspruch 2, **dadurch gekennzeichnet, dass** der Trägerkörper (3) hülsenförmig ausgebildet ist.

4. Abbauwerkzeug nach Anspruch 2, **dadurch gekennzeichnet, dass** der Trägerkörper (3) bolzenförmig ausgebildet ist.

5. Abbauwerkzeug nach Anspruch 2, **dadurch gekennzeichnet, dass** der Trägerkörper (3) scheibenförmig ausgebildet ist.

6. Abbauwerkzeug nach einem der Ansprüche 1 bis 5, **dadurch gekennzeichnet, dass** der oder jeder Abrasivkörper (1) durch Diamanten gebildet sind.

7. Abbauwerkzeug nach einem der Ansprüche 1 bis 6, **dadurch gekennzeichnet, dass** das Trägermaterial (2) 50 Volumen-% bis 100 Volumen-% der Stoffverbindung aus Ti₃SiC₂ enthält.

## Claims

1. Cutting tool for abrasively removing solid materials, comprising at least one abrasive body (1) which is embedded at least partially in a carrier material (2), **characterised in that** the carrier material (2) contains a composition of Ti₃SiC₂.

2. Cutting tool according to claim 1, **characterised in that** the carrier material (2) is arranged at least partially on a rotationally symmetrical carrier body (3).

3. Cutting tool according to claim 2, **characterised in that** the carrier body (3) is configured as a bush.

4. Cutting tool according to claim 2, **characterised in that** the carrier body (3) is configured as a pin.

5. Cutting tool according to claim 2, **characterised in that** the carrier body (3) is configured as a disc.

6. Cutting tool according to any one of claims 1 to 5, **characterised in that** the or each abrasive body (1) is formed by diamonds.

7. Cutting tool according to any one of claims 1 to 6, **characterised in that** the carrier material (2) contains 50 vol.% to 100 vol.% of the composition of Ti₃SiC₂.

## Revendications

1. Outil de surfaçage pour retirer des matières solides, avec au moins un corps abrasif (1) qui est au moins en partie noyé dans un matériau porteur (2), **caractérisé en ce que** le matériau porteur (2) contient un composé en Ti₃SiC₂.

2. Outil de surfaçage selon la revendication 1, **caractérisé en ce que** le matériau porteur (2) est disposé au moins en partie sur un corps porteur à symétrie de révolution (3).

3. Outil de surfaçage selon la revendication 2, **caractérisé en ce que** le corps porteur (3) est conformé en manchon.

4. Outil de surfaçage selon la revendication 2, **caractérisé en ce que** le corps porteur (3) est conformé en goujon.

5. Outil de surfaçage selon la revendication 2, **caractérisé en ce que** le corps porteur (3) est conformé en disque.

6. Outil de surfaçage selon une des revendications 1 à 5, **caractérisé en ce que** le ou chaque corps abrasif (1) est formé par des diamants.

7. Outil de surfaçage selon une des revendications 1 à 6, **caractérisé en ce que** le matériau porteur (2) contient 50 % en volume à 100 % en volume du composé en Ti₃SiC₂.
